# EUROPEAN PATENT APPLICATION

(11) **EP 1 611 783 A1**
(43) Date of publication of application: **04.01.2006**
(21) Application number: 05076026.3
(22) Date of filing: 03.05.2005
(51) Int. Cl.: A01J 7/00, A01J 5/017, A01J 7/04, A01K 1/12

(54) **A device for automatically performing an animal related action and a method for this purpose**

(30) Priority: 29.06.2004 NL 1026513
(71) Applicant: Lely Enterprises AG, 6300 ZUG (CH)
(72) Inventor: Theelen, Antoon Peter André, 3142 CM Maassluis (NL)
(74) Representative: Corten, Maurice Jean F.M.

(57) **Abstract**

A device (1) for automatically performing an animal related action on an animal in an animal area (2), the device being provided with a screening element (8,9,10,12) for screening the animal off from ambient stimuli. The screening element is capable of being placed in a screening position and a reproducing position by means of a control signal, in the screening position fewer ambient stimuli penetrating into the animal area than in the reproducing position.

A method of automatically performing an animal related action on an animal, which method comprises successively the following steps:
* identifying the animal on which the action has to be performed,
* determining an animal data in relation to the animal with the aid of the identity of the animal, the animal being subsequently screened off to a greater or lesser extent from ambient stimuli, depending on the animal data.

## Description

The invention relates to a device for automatically performing an animal related action on an animal according to the preamble of claim 1. The invention also relates to a method using a device for performing an automatic animal related action on an animal according to the preamble of claim 13.

Dutch publication NL 8500090 discloses a method of and a device for automatically milking animals by means of a milking robot. An animal is allowed to move freely in an area and individually to visit, from said area, the milking stall in order to be milked. The milking stall consists of several milking parlours separated from each other by fixed walls.

A problem with such a device is that the animal that undergoes the animal related action reacts negatively to ambient stimuli, for example in such a way that it becomes restless. This has an adverse effect on the animal related action, in particular if the action is performed by an automatic system.

It is inter alia an object of the invention to provide a device of the above-mentioned type, in which the animal related action can proceed more efficiently and more animal-friendly.

To this end, a device of the above-described type according to the invention is characterized by the features of claim 1. By controlling the screening element in such a way that the animal present in or near the device is able to perceive ambient stimuli, or, on the contrary, is screened off from those ambient stimuli, it is possible for the animal to receive precisely those individually attuned stimuli that result in an optimal animal related action.

In a particular embodiment according to the invention, the device is provided with a computer having a memory for an animal data of the animal, and with an animal identification device for determining the identity of the animal and supplying an animal identification signal to the computer, the computer being suitable for supplying the control signal depending on the animal identification signal and/or the animal data. In this manner it is possible to adjust the conditions in relation to the perception of ambient stimuli, for each animal or for each group of animals, in a predetermined manner.

In a particular embodiment according to the invention, the device is capable of being controlled during the animal related action. It is then possible that screening takes place only in case of necessity, for example if the animal related action proceeds in an insufficiently efficient manner.

In a further embodiment, the device comprises a computer and a stimulus sensor for registering an ambient stimulus and supplying a stimulus sensor signal to the computer, and the control signal is capable of being regulated depending on the stimulus sensor signal. In particular, the stimulus sensor comprises a microphone or a light sensor.

In a further particular embodiment, the device comprises a sensor for determining the effectiveness of at least a part of the animal related action and supplying a sensor signal to the computer, the control signal being capable of being regulated depending on the sensor signal. This provides the possibility of feedback, which will lead to greater effectiveness.

In another advantageous embodiment, the signal reproducing device comprises a mirror. A mirror renders a momentary image in a cheap and robust manner. By making the mirror controllable, for example rotatable or tiltable, it is possible to supply or not to supply an image to the animal or to show an image of a specific part of the area.

In particular, the mirror is capable of being placed in a first position, in which it shows an animal present in the animal area an image from outside the animal area, and in a second position, in which it shows said animal another image or no image from outside the animal area. It has been found that visual signals from other animals belonging to the same herd can have a varying effect on the animal's feeling at ease.

In again another embodiment, the screening element constitutes a wall portion of the device, which wall portion is capable of being placed in an image-transmitting position and in an image-shading position. By designing the screening element as a wall, it will occupy little or no additional space in the animal area.

In particular, the animal related action implies the milking of the animal. From research it is known that animal contact is important for an efficient milking process. This is in particular the case if no farmer is present at the milking process, as is the case if the device comprises a milking robot for milking the animal.

The invention further relates to a method of automatically performing an animal related action on an animal, which method comprises successively the following steps:
* identifying the animal on which the action has to be performed,
* determining an animal data in relation to the animal with the aid of the identity of the animal, characterized in that the animal is subsequently screened off to a greater or lesser extent from ambient stimuli, depending on the animal data. Owing to the fact that it is screened off from ambient stimuli, the animal will feel more at ease, so that the animal related action can be performed more easily and more rapidly.

The animal data comprises in particular the age of the animal. It has been found that the more an animal advances in age, the more it gets accustomed to ambient stimuli, so that screening is less necessary.

In a further particular embodiment of the method, the animal data comprises the parity of the animal or the lactation stage of the animal. In particular animals that have recently given birth are very sensitive to ambient stimuli.

It is further advantageous if the animal data concerns the historical sensitivity of the animal to ambient stimuli.

In a further favourable embodiment of the method, the method comprises the steps of:
* determining the effectiveness of at least a part of the animal related action, and of
* changing the screening only if the effectiveness is insufficient.

In again a further particular method according to the invention, the animal belongs to a group and only those ambient stimuli that originate from an animal belonging to the same group are screened to a greater or lesser extent. It has been found that an animal is in particular sensitive to stimuli that originate from animals with which it is hierarchically related.

In a further particular embodiment of the method, after the identity of the animal has been determined, the following steps are performed successively:
* determining the rank of the animal in the group;
* screening ambient stimuli depending on the rank of the animal on which the animal related action has to be performed.

It is advantageous if, additionally, the following steps are performed:
* determining from which individual or which individuals the ambient stimuli originate,
* determining the rank of this/these individual(s), and
* screening only those ambient stimuli that originate from individuals occupying a higher rank.

Owing to the fact that the animal that undergoes the animal related action is put at ease by the animal signals from the animals belonging to the group, the animal related action will proceed more efficiently.

In a favourable embodiment of the method according to the invention, the animal signal is supplied depending on the age of the animal. In general, older animals are more accustomed to signals. Therefore, animal signals will have to be supplied to these animals in another manner than to younger animals.

According to again another embodiment, the animal signal is given depending on the parity of the animal. In particular animals with parity 1 are very sensitive to animal signals and, therefore, animal signals will have to be supplied to them in another manner than to animals having a higher parity.

It is advantageous if the animal signal is supplied depending on the lactation stage of the animal. Just after giving birth, so at an early lactation stage, a dairy animal may be more sensitive to animal signals and, therefore, animal signals will have to be supplied at that stage in another manner than at a later stage.

In an embodiment according to the invention, the method comprises the actions of determining the effectiveness of the animal related action or a part of the animal related action and of reproducing the signal only in the case of insufficient effectiveness. Sensors can detect, for example, the speed of progress of a particular action. If said speed is below a threshold value, it is possible to take extra measures to put the animal at ease. In cases in which the effectiveness is sufficient, no reproduction takes place. As a result, the animal present in the device or the animals present in the vicinity of the device are not disturbed unnecessarily.

In another embodiment according to the invention, the animal signal is recorded by a recording device and supplied momentarily to the animal. By means of this method, during the animal related action, the same ambient factors can be supplied to the animal as those perceived by the animal when it was still outside the device. This makes the animal experience the device as less isolated from the environment.

In a particular embodiment according to the invention, after identification the following actions are performed successively: determining the rank of the animal in the group and supplying the animal signal depending on the rank of the animal present in the device. It is known that animals react nervously to other animals occupying a higher rank in their group. This stress can have a negative effect on an animal related action. By means of this method it is possible to supply no animal signals to animals occupying a low rank within a group.

In a particular embodiment of the invention, the following actions are performed additionally: determining from which individual or which individuals the animal signals originate, determining the rank of this/these individual(s) and selectively supplying animal signals only originating from individuals occupying a lower rank. By only reproducing animal signals from animals occupying a lower rank, the animal in the device will experience less stress. This can take place more accurately if it is known from which animals the animal signals originate.

The invention will be explained hereinafter in further detail with reference to an embodiment shown in the drawing, in which:

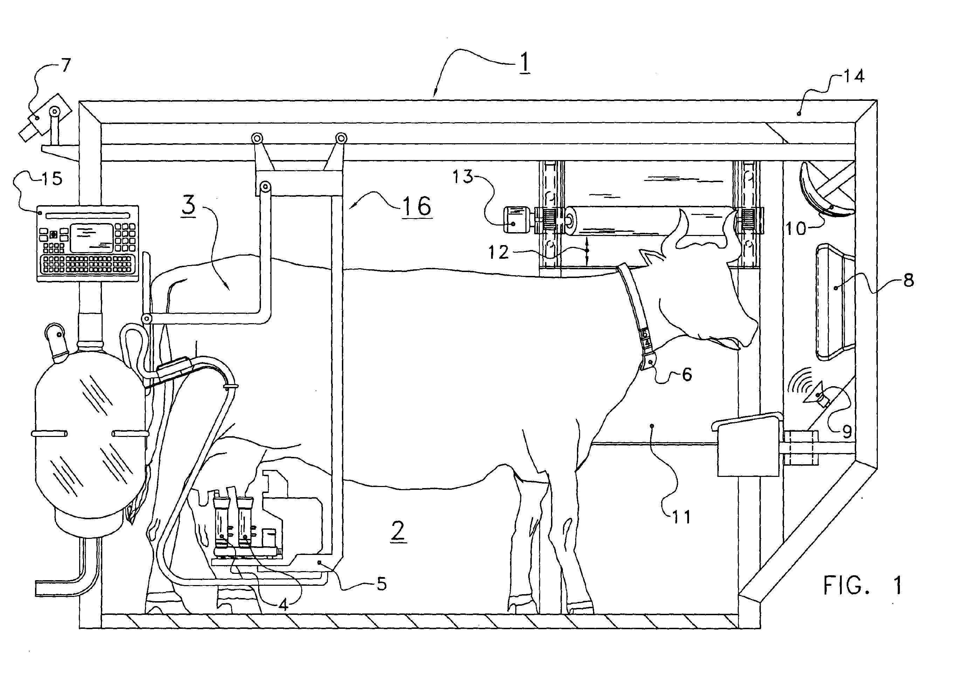

Figure 1 shows a side view of a possible device 1 according to the invention for automatically performing an animal related action on an animal in an animal area 2, the device being provided with a screening element 8, 9, 10, 12 for screening the animal off from ambient stimuli, characterized in that the screening element 8, 9, 10, 12 is capable of being placed in a screening position or a reproducing position by means of a control signal, in the screening position fewer ambient stimuli penetrating into the animal area 2 than in the reproducing position. The animal related action concerns actions for automatically milking an animal present in the animal area 2 of the device 1 by means of a milking robot 16. The milking robot 16 comprises an arm 5 with, attached thereto, teat cups 4 to be connected to the teats of the animal. The functioning of the arm 5 and the drawing of the milk take place in a known manner and will not be explained in further detail.

Although the invention is described with reference to a device 1 comprising a milking robot 16 for milking a cow, the invention is not limited thereto. The invention may also be applied to other (agricultural) animals, such as pigs, and to other types of devices, such as a feeding box for supplying feed to an animal, a leg treatment device for automatically treating leg problems, an automatic shaving device, an automatic insemination device or to a heat detection box for detecting heat with an animal.

The device 1 is provided with a computer 15 having a memory for an animal data of the animal, and with an animal identification device for determining the identity of the animal and supplying an animal identification signal to the computer 15, the computer 15 being suitable for supplying the control signal depending on the animal identification signal and/or the animal data. The animal identification device known per se is constituted by a transponder 6 which is disposed around the neck of the cow to be milked and which co-operates with a transmitter/receiver. When the cow reports at the device 1, the animal identification device supplies an animal identification signal to the computer 15 which, based on said signal, determines the identity of the cow in a known manner. Different signal reproducing means 8, 9, 10, 12 for supplying an animal signal are fastened to a frame 14, such as a loudspeaker 9 for reproducing sound, a screen 8 that is suitable for showing video images, a wall portion 12 that is capable of being placed in an image-transmitting position and in an image-shading position, and a mirror 10. All screening means 8, 9, 10, 12 are capable of being controlled by the central computer 15. Said computer 15 also controls the actions of the milking robot 16.

By ambient stimulus is meant a signal originating from outside the animal area and perceivable by one of the senses of the animal. Not always, but in most cases, said ambient stimulus will be a visual signal. The ambient stimuli are not necessarily positive, i.e. pleasant for the animal, but may also be negative and unpleasant stimuli. In that case, the screening means 8, 9, 10, 12 are capable of being controlled in such a way that they prevent said negative ambient stimuli from being reproduced.

The device 1 performs successively the following actions: identification of the animal on which the action has to be performed, determination of animal data with the aid of the identity, the supply of an animal signal that is perceivable by the animal taking place depending on the animal data.

The cow reports at the device 1 and is identified. The computer 15 determines the identity from the animal identification signal. In the memory of the computer 15 different animal data of the relevant cow are stored, among which the point of time of the latest milking. If said milking has taken place a particular time ago, the cow is admitted to the device 1 for being milked.

Screening ambient stimuli takes place in particular depending on the lactation stage of the animal. The animal data contain data in relation to the lactation stage. It is known that cows that have just given birth, so cows that are at an early lactation stage, can be very nervous. For an efficient milking, it is then necessary to put these animals at ease via positive ambient stimuli. The computer 15 retrieves the calving date of the relevant cow from its memory and determines, on the basis of that date and the current date, the lactation stage. If the lactation stage has not reached a particular limit, screening means 8, 9, 10, 12 are activated.

The animal data may also contain data in relation to age or parity and in that case the screening means 8, 9, 10, 12 are controlled, in an analogous manner, depending on the age or the parity of the cow.

The method of the device comprises additionally the actions of determining the effectiveness of the animal related action or a part of the animal related action and of changing the screening only in the case of insufficient effectiveness. A flow meter is disposed in the arm 5 of the milking robot 16. Said flow meter measures the milk flow and passes the data to the computer 15. If the milk flow after connection is lower than a threshold value, the effectiveness of the milking process is insufficient. The computer 15 subsequently controls the screening means 8, 9, 10, 12, so that the cow will be located in a more pleasant environment. The mentioned threshold value may vary per cow, because one cow lets down the milk by nature more easily than another cow. In that case, the threshold values constitute part of the animal data.

The milking process also proceeds insufficiently, for example, if it is detected that the connection duration is longer than a predetermined duration, or if it is detected that the cow moves very frequently. The last mentioned phenomenon can be established in a simple manner by means of the backside-follower 3. Sensors in this device detect movements in the longitudinal direction of the animal area and control the robot arm 5 with the aid of the detection results.

The method of the device 1 additionally comprises, after identification, successively the actions of determining the rank of an animal belonging to a group in that group, screening ambient stimuli depending on the rank of the animal present in the device 1, determining from which individual or which individuals the ambient stimuli originate, determining the rank of this/those individual(s) and only screening ambient stimuli from individuals occupying a higher rank. A cow is a gregarious animal and a herd has a rather strict hierarchy. A cow may see or hear another cow occupying a higher rank and react thereto by means of a stress reaction. This stress reaction may lead to restless movements in the animal area 2 of the device 1 and hinder the animal related action. After identification, the computer 15 determines the rank of the cow from a table with ranking data stored in the memory. The ranking is represented by an integer ranking number that is smaller than or equal to the number of animals in the herd. It is also possible for the computer 15 to determine, from the image of the camera 7, by means of known image recognition techniques, the identity of the animal or animals present in that image. The identity of animals located in the immediate vicinity of the device 1 can also be determined by means of other known techniques. In that case, just outside the device there is arranged a transmitter/receiver which, by means of the transponder of an animal which is located near the transmitter/receiver and which gives a signal, determines the identity of this animal. The rank of this signal giving animal is retrieved from a table in the memory of the computer 15 and is subsequently compared with the rank of the cow to be milked. If the rank number obtained is lower than the rank number of the cow to be milked, the computer 15 supplies control signals to the screening means 8, 9, 10, 12 in order to screen the animal signals originating from this animal, for example images or sounds.

The different screening means 8, 9, 10, 12 will now be explained in further detail.

Ambient stimuli may be visual animal signals. A screening element for this purpose is the screen 8 in combination with the walls of the animal area. The walls surrounding the animal area screen the animal off from ambient stimuli. The screen 8 shows images from outside the device taken by the camera 7. If the computer 15 has determined in the manner described before whether the animal has to be screened off, it will not show images on the screen 8 and the walls of the device will ensure that the environment is removed or almost removed from sight. The image can also be obtained from a recording device, such as a video recorder or a DVD-recorder. In that case, the computer 15 can make a choice from a collection of recorded images of the environment.

Another screening element for visual signals is a mirror 10 that is capable of being controlled and capable of being placed in such a position that, when an animal is present in the device 1, the mirror 10 shows the animal an image from outside the device 1. The computer 15 is capable of controlling the mirror 10 in such a way that the cow is shown an image of the environment with, in all probability, other animals from the group present therein, or in such a way that the cow is shown only an image of herself. Furthermore, the mirror 10 is capable of being rotated in such a way that no image is shown.

Again another screening element for visual signals comprises a wall portion 12 of the device 1, which wall portion is capable of being placed in an image-transmitting position and in an image-shading position. In the embodiment described, this wall portion is designed as a rollable screen 12 that shuts off an aperture in an, apart from that, closed side wall of the device. When said wall portion 12 is in its rolled down position, the cow has a sight of the area surrounding the device 1 and, consequently, has the possibility of perceiving visual signals from other animals during milking. By activating the motor 13, it is possible to make the screen 12 roll upwards or downwards in vertical direction in order to make the window 11 image-shading respectively image-transmitting. Making the window image-shading or image-transmitting may also take place in other known ways, such as by means of controllable lamellas, sliding panels, or in a fully electronic manner with the aid of liquid crystals. To hypersensitive cows, such as certain heifers that have just given birth, it would be beneficial to receive a minimum of ambient stimuli, in particular originating from other animals. Therefore, with these animals, the screen 12 will be closed. As a result, the other animals no longer have sight of the interior of the device and are unable to focus their possible negative behaviour on it. An example of such a negative behaviour is trying to chase the animal away from the device 1.

Ambient stimuli may be sound signals. A reproduction device for this purpose is the loudspeaker 9. The loudspeaker 9 may be connected directly with a microphone that is located outside the device, the computer 15 determining whether the sounds are transmitted. The walls of the device 1 ensure screening of ambient sounds. The loudspeaker 9 may also be connected with a device for making sounds audible on behalf of a sound carrier. In this manner, analogous to what has been described with respect to images, sounds can optionally be made audible. The intensity of the signal made audible is adjustable. The preference of individual cows for a certain sound volume constitutes part of the animal data, so that it is possible for the computer 15 to adapt the intensity of the sound to the individual animal.

The screening of ambient stimuli can be varied during the milking process. It is thus possible to reduce the sound transmitted by the microphone in a critical phase, such as the connection of the teat cups 4.

## Claims

1. A device for automatically performing an animal related action on an animal in an animal area, the device being provided with a screening element for screening the animal off from ambient stimuli, **characterized in that** the screening element is capable of being placed in a screening position or a reproducing position by means of a control signal, in the screening position fewer ambient stimuli penetrating into the animal area than in the reproducing position.

2. A device as claimed in claim 1, **characterized in that** the device is provided with a computer having a memory for an animal data of the animal, and with an animal identification device for determining the identity of the animal and supplying an animal identification signal to the computer, the computer being suitable for supplying the control signal depending on the animal identification signal and/or the animal data.

3. A device as claimed in any one of the preceding claims, **characterized in that** the screening element is capable of being controlled during the animal related action.

4. A device as claimed in claim 1, 2 or 3, **characterized in that** the device comprises a computer and a stimulus sensor for registering an ambient stimulus and supplying a stimulus sensor signal to the computer, the control signal being capable of being regulated depending on the stimulus sensor signal.

5. A device as claimed in claim 4, **characterized in that** the stimulus sensor comprises a microphone.

6. A device as claimed in claim 4 or 5, **characterized in that** the stimulus sensor comprises a light sensor.

7. A device as claimed in any one of claims 2 to 6, **characterized in that** the device comprises a sensor for determining the effectiveness of at least a part of the animal related action and supplying a sensor signal to the computer, the control signal being capable of being regulated depending on the sensor signal.

8. A device as claimed in any one of the preceding claims, **characterized in that that** the screening element comprises a mirror.

9. A device as claimed in claim 8, **characterized in that** the mirror is capable of being placed in a first position, in which it shows an animal present in the animal area an image from outside the animal area, and in a second position, in which it shows said animal another image or no image from outside the animal area.

10. A device as claimed in any one of the preceding claims, **characterized in that** the screening element constitutes a wall portion of the device, which wall portion is capable of being placed in an image-transmitting position and in an image-shading position.

11. A device as claimed in any one of the preceding claims, **characterized in that** the animal related action implies the milking of the animal.

12. A device as claimed in any one of the preceding claims, **characterized in that** the device comprises a milking robot for milking the animal.

13. A method of automatically performing an animal related action on an animal, which method comprises successively the following steps:
* identifying the animal on which the action has to be performed,
* determining an animal data in relation to the animal with the aid of the identity of the animal, **characterized in that** the animal is subsequently screened off to a greater or lesser extent from ambient stimuli, depending on the animal data.

14. A method as claimed in claim 13, **characterized in that** the animal data comprises the age of the animal.

15. A method as claimed in claim 13 or 14, **characterized in that** the animal data comprises the parity of the animal.

16. A method as claimed in any one of claims 13 to 15, **characterized in that** the animal data comprises the lactation stage of the animal.

17. A method as claimed in any one of claims 13 to 16, **characterized in that** the animal data comprises the historical sensitivity of the animal to ambient stimuli.

18. A method as claimed in any one of claims 13 to 17, **characterized in that** the method comprises the steps of:
* determining the effectiveness of at least a part of the animal related action, and of
* changing the screening only if the effectiveness is insufficient.

19. A method as claimed in claim 18, the animal belonging to a group, **characterized in that** only those ambient stimuli that originate from an animal belonging to the same group are screened to a greater or lesser extent.

20. A method as claimed in any one of claims 13 to 19, **characterized in that**, after the identity of the animal has been determined, the following steps are performed successively:
* determining the rank of the animal in the group;
* screening ambient stimuli depending on the rank of the animal on which the animal related action has to be performed.

21. A method as claimed in claim 20, **characterized in that** the following steps are performed additionally:
* determining from which individual or which individuals the ambient stimuli originate,
* determining the rank of this/these individual(s), and
* screening only those ambient stimuli that originate from individuals occupying a higher rank.
